Europäisches Patentamt

European Patent Office

Office européen des brevets

(11) Numéro de publication: **0 323 933**
**A1**

# (12) DEMANDE DE BREVET EUROPEEN

(21) Numéro de dépôt: 89400025.6

(22) Date de dépôt: 04.01.89

(51) Int. Cl.⁴: **B 60 F 1/04**

(30) Priorité: 04.01.88 FR 8800008

(43) Date de publication de la demande:
12.07.89  Bulletin 89/28

(84) Etats contractants désignés:
AT BE CH DE ES FR GB GR IT LI LU NL SE

(71) Demandeur: **Van Landeghem, Emile**
**Chatillon-sur-Morin**
**F-51310 Esternay (FR)**

(72) Inventeur: **Van Landeghem, Emile**
**Chatillon-sur-Morin**
**F-51310 Esternay (FR)**

(74) Mandataire: **Nony, Michel et al**
**Cabinet NONY & CIE 29, rue Cambacérès**
**F-75008 Paris (FR)**

(54) **Perfectionnements aux véhicules rail-route.**

(57) L'invention est relative à un véhicule muni de roues (2;3) pour permettre sa circulation sur route et d'au moins une première paire de galets avant (39) et une première paire de galets arrière (19) pour permettre sa circulation sur les rails d'une voie ferrée, chaque paire de galets étant montée sur un bâti (4,8) monté lui-même pivotant autour d'un axe (6,9) sur le châssis (5) du véhicule, entre une position haute où le véhicule est en appui sur ses roues et une position basse où le véhicule est en appui sur ses galets.

Lorsque l'un au moins des bâtis est en position basse, l'axe des galets de ladite première paire qu'il supporte est décalé longitudinalement par rapport à l'axe de pivotement du bâti en direction du centre du véhicule, une butée (38) étant prévue pour empêcher un pivotement du bâti au delà de ladite position basse en direction dudit centre du véhicule.

EP 0 323 933 A1

**Description**

## Perfectionnements aux véhicules rail-route.

La présente invention concerne un véhicule rail-route, c'est-à-dire un véhicule muni de roues pour permettre sa circulation sur route, et d'au moins une première paire de galets avant et une première paire de galets arrière pour permettre sa circulation sur les rails d'une voie ferrée, et plus particulièrement un tel véhicule dans lequel chaque paire de galets est montée sur un bâti monté lui-même pivotant autour d'un axe sur le châssis du véhicule, entre une position haute où le véhicule est en appui sur ses roues, et une position basse où le véhicule est en appui sur ses galets.

On connait déjà de tels véhicules dans lesquels le mouvement de pivotement des bâtis par rapport au châssis est généralement réalisé à l'aide de vérins hydrauliques.

Il se pose dans ce genre de véhicule un problème de fiabilité et de sécurité. En effet, lorsque le véhicule est en appui sur ses galets avec les bâtis de support en position basse, le poids du véhicule est transmis aux galets par l'intermédiaire des moyens d'actionnement, et notamment des vérins hydrauliques précités.

En position rail, ces moyens d'actionnement sont par conséquent actifs en permanence, une panne entraînant la chute du véhicule sur ses roues.

La présente invention vise à pallier cet inconvénient.

A cet effet, l'invention a pour objet un véhicule muni de roues pour permettre sa circulation sur route et d'au moins une première paire de galets avant et une première paire de galets arrière pour permettre sa circulation sur les rails d'une voie ferrée, chaque paire de galets étant montée sur un bâti monté lui-même pivotant autour d'un axe sur le châssis du véhicule, entre une position haute où le véhicule est en appui sur ses roues, et une position basse où le véhicule est en appui sur ses galets, caractérisé par le fait que, lorsque l'un au moins des bâtis est en position basse, l'axe des galets de ladite première paire qu'il supporte est décalé longitudinalement par rapport à l'axe de pivotement du bâti en direction du centre du véhicule, une butée étant prévue pour empêcher un pivotement du bâti au-delà de ladite position basse en direction dudit centre du véhicule.

En d'autres termes, lorsque le véhicule est en position rail avec ses deux bâtis en position basse, l'axe des galets montés sur le bâti avant est déporté vers l'arrière par rapport à l'axe de pivotement du bâti avant, et l'axe des galets montés sur le bâti arrière est déporté vers l'avant par rapport à l'axe de pivotement du bâti arrière.

Dans cette position, les deux bâtis pivotants sont en appui sur leur butée respective, de sorte qu'il n'est pas nécessaire de maintenir en fonction les moyens de pivotement tels que les vérins hydrauliques.

Bien entendu, dans ce cas, les moyens de pivotement doivent être à double effet pour permettre le léger soulèvement du véhicule nécessaire au retour des bâtis en position haute, c'est-à-dire le retour du véhicule en position route.

Dans un mode de réalisation particulièrement avantageux de l'invention, la butée précitée comporte, du côté des roues motrices du véhicule, au moins un rouleau d'entraînement monté à rotation sur le bâti et agencé pour venir au contact d'une des roues motrices lorsque le bâti est en position basse, des moyens de transmission étant prévus pour transmettre le mouvement de rotation dudit rouleau aux galets.

Le mouvement est par conséquent transmis aux galets directement à partir des roues motrices par l'intermédiaire du rouleau d'entraînement. Le poids du véhicule a tendance à appliquer fermement ce rouleau contre les roues, donnant ainsi une adhérence optimale sans l'intervention de moyens spécifiques d'appui du rouleau sur les roues.

Cet agencement permet également une grande simplicité de réalisation puisqu'aussi bien le rouleau d'entraînement que les galets sont simplement montés à rotation sur le bâti qui, en position rail, est lui-même en appui sur les roues motrices du véhicule.

Dans un mode de réalisation particulier, les moyens de transmission comprennent au moins une chaîne de transmission montée sur au moins un pignon porté par l'arbre des galets.

Le bâti peut en outre supporter un arbre intermédiaire comportant au moins un pignon sur lequel est montée ladite chaîne.

Les bâtis peuvent en outre supporter une deuxième paire de galets, des moyens étant prévus pour disposer le véhicule en appui sélectivement sur la première, la deuxième ou les deux paires de galets, la première paire de galets ayant ses boudins du côté intérieur par rapport à l'axe longitudinal du véhicule et la deuxième paire ayant ses boudins du côté extérieur.

En fonctionnement rail normal, le véhicule est en appui sur ses quatre paires de galets avec une répartition des charges telle que le centre d'appui de chaque bâti pivotant demeure déporté vers le centre du véhicule par rapport à son axe de rotation sur le châssis.

Le véhicule peut par contre être sélectivement placé en appui uniquement sur ses galets ayant leurs boudins situés à l'extérieur, de manière à franchir sans les déclencher les pédales de signalisation, ou uniquement sur ses galets ayant leurs boudins à l'intérieur pour franchir les aiguillages.

On décrira maintenant à titre d'exemple non limitatif un mode de réalisation particulier de l'invention en référence aux dessins annexés dans lesquels :

   - la figure 1 est une vue schématique de côté d'un véhicule selon l'invention,
   - la figure 2 est une vue de côté à plus grande échelle de la partie arrière de ce véhicule,
   - la figure 3 est une vue simplifiée de l'arrière, et

- la figure 4 est une vue simplifiée en coupe selon la ligne IV-IV de la figure 2.

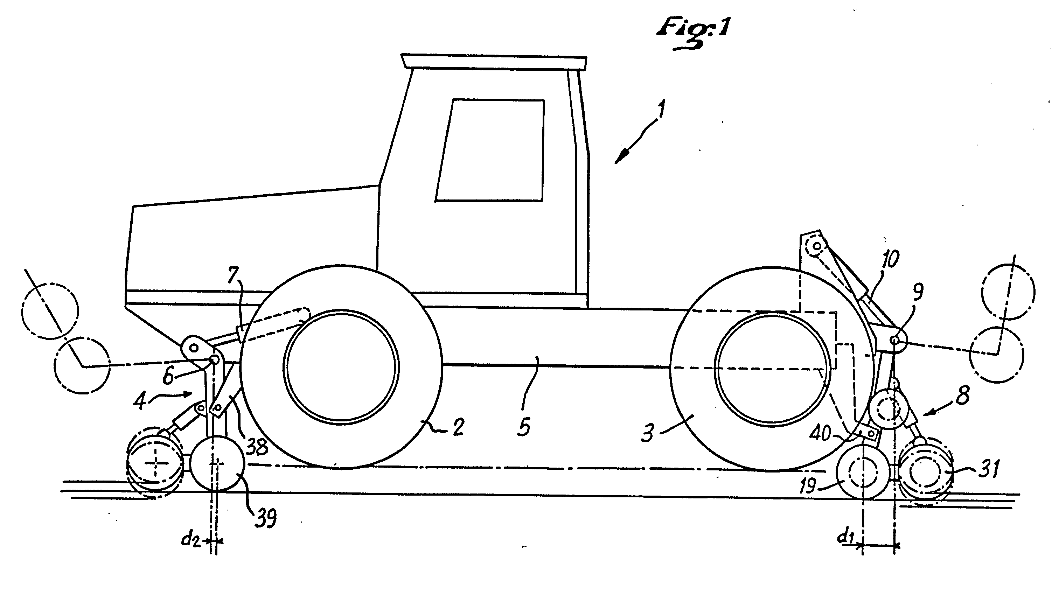

La figure 1 représente d'une manière générale en 1 un véhicule routier muni de roues directrices 2 à l'avant et de roues motrices 3 à l'arrière.

Un bâti 4 est monté pivotant à l'avant du châssis 5 du véhicule autour d'un axe 6, un vérin hydraulique 7 permettant de faire pivoter ce bâti d'une position haute représentée en traits mixtes à une position basse représentée en traits pleins.

De même, un bâti 8 est monté pivotant à l'arrière du châssis 5 autour d'un axe 9, un vérin 10 permettant d'assurer ce pivotement d'une position haute représentée en traits mixtes à une position basse représentée en traits pleins.

Le véhicule 1 est en position route, c'est-à-dire en appui sur ses roues 2 et 3, lorsque les bâtis 4 et 8 sont en position haute. Il est par contre en position rail lorsque les bâtis sont en position basse.

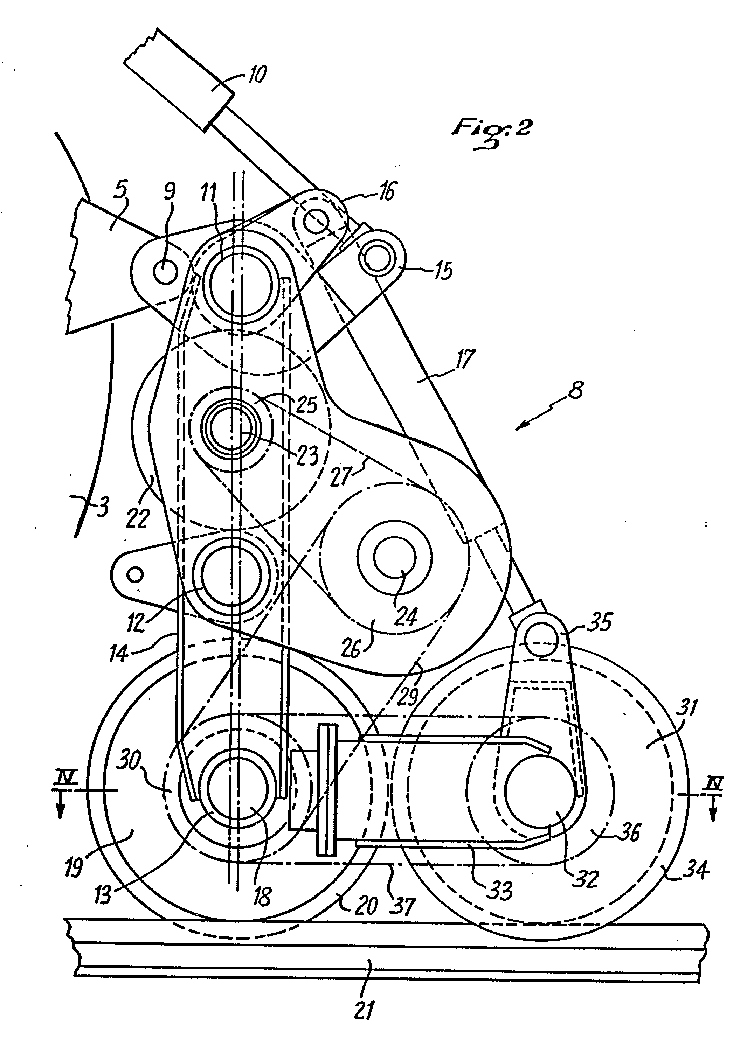

Le bâti 8, représenté plus en détail aux figures 2 à 4, est composé pour l'essentiel de trois tubes horizontaux 11,12 et 13 et d'un caisson 14.

Le tube 11 porte des ferrures 15 pour la fixation des vérins 10 et des ferrures 16 pour la fixation de vérins 17 dont la fonction sera décrite ci-après.

Le tube 13 reçoit l'arbre 18 d'une première paire de galets de roulement 19, possédant des boudins intérieurs 20 pour permettre leur roulement de façon usuelle sur des rails 21.

Deux rouleaux d'entraînement 22 sont montés sur le bâti par l'intermédiaire d'un arbre commun 23. Chacun des rouleaux est disposé dans le plan vertical d'une des deux roues 3 de manière à pouvoir venir en contact avec cette roue dans la position représentée à la figure 1.

Dans cette position, le bâti 8 est en butée sur les roues 3 par l'intermédiaire des rouleaux 22. La figure 2 représente le bâti dans une position intermédiaire où l'axe de l'arbre 18 est en arrière de l'axe 9. Par contre, dans la position de la figure 1, l'axe des galets 19 est déporté vers l'avant par rapport à l'axe 9 d'une distance $d_1$.

Un arbre intermédiaire 24 est également porté par le bâti 8. Un pignon 25 porté par l'arbre 23 et un pignon 26 porté par l'arbre 24 sont reliés par une chaîne 27.

Deux autres pignons 28 portés par l'arbre 24 sont reliés par des chaînes 29 à des pignons 30 portés par l'arbre 18 des galets 19.

Ainsi, lorsqu'en position rail les rouleaux d'entraînement 22 sont appliqués contre les roues 3 et que ces dernières sont entraînées, elles provoquent l'entraînement des galets 19 et le roulement du véhicule 1 sur la voie 21.

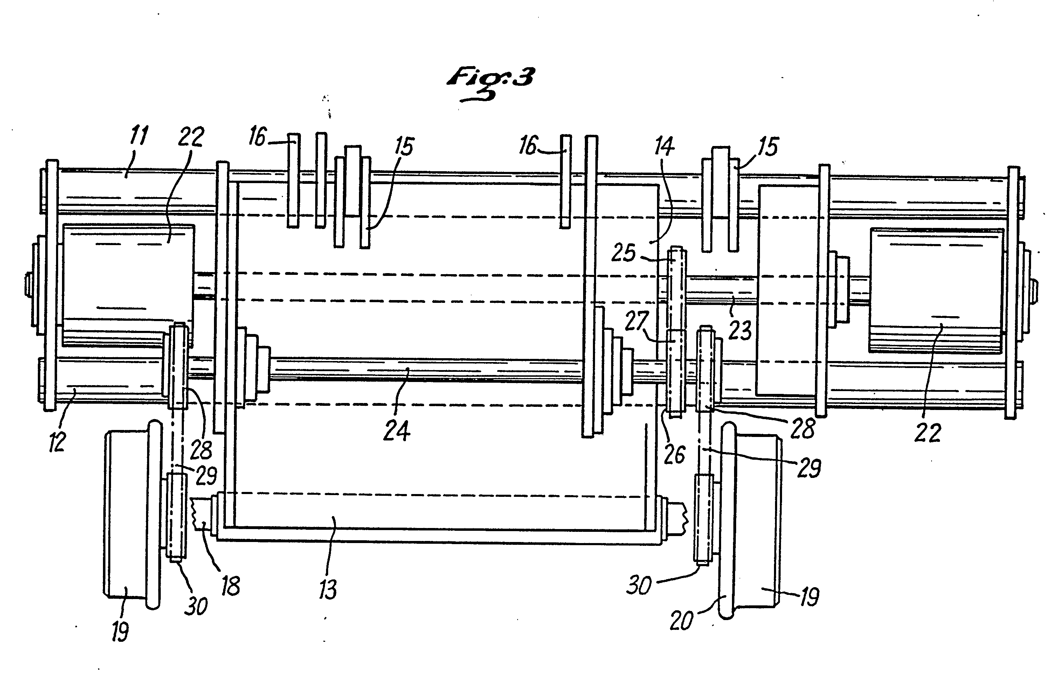

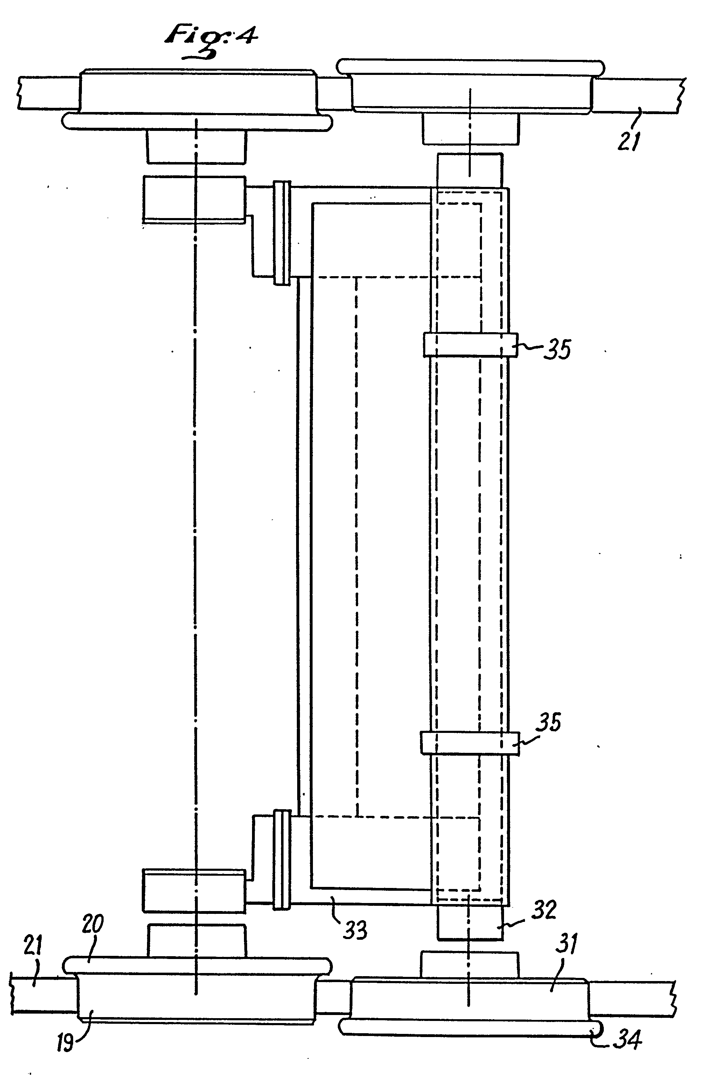

Deux autres galets 31, non représentés à la figure 3, sont montés sur un arbre 32 supporté par un cadre 33 monté pivotant sur le tube 18. Les galets 31 ont leurs boudins 34 à l'extérieur de la voie, comme cela ressort particulièrement de la figure 4.

L'extrémité des vérins 17 opposée à la ferrure 16 est reliée à une ferrure 35 solidaire du cadre 33. Les vérins 17 permettent par conséquent de faire pivoter le cadre 33 et les galets 31 qu'ils supportent autour de l'axe des galets 19.

Les différentes positions correspondantes sont représentées à la figure 1. Les galets 19 et 31 peuvent être simultanément en appui sur la voie 21. On peut aussi, grâce aux vérins 17, mettre le véhicule 1 uniquement en appui sur les galets 19 pour le franchissement des aiguillages, ou uniquement sur les galets 31 pour le franchissement des dédales de signalisation.

Pour permettre l'entraînement dans cette dernière configuration, deux pignons 36, montés respectivement sur les arbres 18 et 32 des galets 19 et 31, sont reliés par une chaîne 37, de sorte que tous les galets du bâti 8 sont moteurs.

Le bâti avant 4 est similaire au bâti arrière 8 à l'exception des organes moteurs. En particulier, le bâti 4 ne porte pas de rouleaux d'entraînement et se trouve, en position basse, en appui contre une butée 38.

Dans cette position où il est en butée, l'axe du galet arrière 39 se trouve déporté vers l'arrière par rapport à l'axe de rotation 6 d'une distance $d_2$.

On remarquera qu'une butée 40 similaire à la butée 38 est prévue à l'arrière du véhicule pour le bâti 8. Cette butée permet d'éviter d'exercer une trop forte pression sur les roues 3 par l'intermédiaire des rouleaux d'entraînement 22.

Du fait des déports $d_1$ et $d_2$, le véhicule est stable dans sa position rail représentée à la figure 1, de sorte qu'il n'est pas nécessaire de maintenir les vérins 7 et 10 en pression.

Diverses variantes et modifications peuvent bien entendu être apportées à la description qui précède sans sortir pour autant du cadre ni de l'esprit de l'invention.

C'est ainsi en particulier que les deux pignons 25 et 26 ainsi que la chaîne 27 pourraient être remplacés par des engrenages.

**Revendications**

1. Véhicule muni de roues (2;3) pour permettre sa circulation sur route et d'au moins une première paire de galets avant (39) et une première paire de galets arrière (19) pour permettre sa circulation sur les rails d'une voie ferrée, chaque paire de galets étant montée sur un bâti (4,8) monté lui-même pivotant autour d'un axe (6,9) sur le châssis (5) du véhicule, entre une position haute où le véhicule est en appui sur ses roues et une position basse où le véhicule est en appui sur ses galets, caractérisé par le fait que lorsque l'un au moins des bâtis est en position basse, l'axe des galets de ladite première paire qu'il supporte est décalé longitudinalement par rapport à l'axe de pivotement du bâti en direction du centre du véhicule, une butée (22,38) étant prévue pour empêcher un pivotement du bâti au delà de ladite position basse en direction dudit centre du véhicule.

2. Véhicule selon la revendication 1, caractérisé par le fait que du côté des roues motrices du véhicule, ladite butée comporte au moins un rouleau d'entraînement (22) monté à rotation sur le bâti et agencé pour venir au contact d'une des roues motrices (3) lorsque le bâti est en position basse, des moyens de transmission étant prévus pour transmettre le mouvement de rotation dudit rouleau aux galets.

3. Véhicule selon la revendication 2, caractérisé par le fait que lesdits moyens de transmission comprennent au moins une chaîne de transmission (29) montée sur au moins un pignon (30) porté par l'arbre (18) des galets.

4. Véhicule selon la revendication 3, caractérisé par le fait que ledit bâti supporte en outre un arbre intermédiaire (24) portant au moins un pignon (26) sur lequel est montée ladite chaîne.

5. Véhicule selon l'une quelconque des revendications 1 à 4, caractérisé par le fait que les bâtis supportent en outre une deuxième paire de galets (31), des moyens (17) étant prévus pour disposer le véhicule en appui sélectivement sur la première, la deuxième, ou les deux paires de galets, la première paire de galets ayant ses boudins (20) du côté intérieur par rapport à l'axe longidutinal du véhicule, et la deuxième paire ayant ses boudins (34) du côté extérieur.

Fig.1

Fig. 2

Fig. 3

EP 0 323 933 A1

*Fig.4*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 545 763 (E. VAN LANDEGHEM) * Figures 1,2; page 3, ligne 11 - page 4, ligne 32 * | 1 | B 60 F 1/04 |
| A | | 2,3,5 | |
| | --- | | |
| Y | DE-B-1 244 833 (BETEILIGUNGS- UND PATENTVERWALTUNGSGESELLSCHAFT mbH) * Figures 1-5; colonne 4, ligne 43 - colonne 5, ligne 65 * | 1 | |
| A | | 2 | |
| | --- | | |
| A | EP-A-0 023 476 (DANIELI & C. OFFICINE MECCANICHE S.p.A.) * Figures 1-6; page 9, ligne 18 - page 10, ligne 16; page 13, ligne 15 - page 15, ligne 16; revendications 1-3 * | 1-4 | |

|  |
|---|
| DOMAINES TECHNIQUES RECHERCHES (Int. Cl.4) |
| B 60 F B 62 D B 61 D |

Le présent rapport a été établi pour toutes les revendications

| Lieu de la recherche | Date d'achèvement de la recherche | Examinateur |
|---|---|---|
| LA HAYE | 03-03-1989 | CHLOSTA P. |

EPO FORM 1503 03.82 (P0402)